Europäisches Patentamt

European Patent Office

Office européen des brevets

(19)

(11) **EP 1 191 748 A1**

(12) **EUROPEAN PATENT APPLICATION**

(43) Date of publication:
**27.03.2002 Bulletin 2002/13**

(51) Int Cl.$^7$: **H04L 12/40**, H04L 12/56

(21) Application number: **00830638.3**

(22) Date of filing: **26.09.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicants:
• **TELEFONAKTIEBOLAGET LM ERICSSON**
**126 25 Stockholm (SE)**
• **Flextel S.P.A.**
**10015 Ivrea (IT)**

(72) Inventors:
• **Cristofoli, Bruno**
**10019 Strambino, Torino (IT)**
• **Ruggeri, Domenico**
**00040 Roma (IT)**

(74) Representative: **Vatti, Paolo, Dr. Ing. et al**
**Fumero Studio Consulenza Brevetti Snc**
**Pettenkoferstrasse 20-22**
**80336 München (DE)**

(54) **Method for the fair data transfer in a shared bus by means of a distributed arbitration algorithm**

(57)     Method to transfer data among different modules of a system connected by a shared bus, particularly to obtain a continuous and without inactive period fairly shared use of resources among the modules themselves under traffic-jam conditions, which employs a distributed arbitration algorithm, that can be implemented on both hardware and software of the different modules of the system. This algorithm ensures a fair and weighed access of the data to the shared bus interconnecting the modules, the weight relating to each module/flow being monitored through tags. Said tags are applied to the data flows entering each module, in order to monitor the access to the shared bus.

ARBITRATION BUS TRANCEIVERS

FIG. 2

**Description**

FIELD OF THE INVENTION

The present invention relates to a method for the continuous and without inactive period transfer of data among different entities (which can be both source and destination of data), for instance among the modules (computers) of a system (like a telecommunication system), which are connected by a shared bus, particularly in order to obtain a use of resources fairly shared among the modules theirselves under traffic-jam conditions. To this purpose, the present invention uses a new weighed Round-Robin algorithm, apt to ensure an easy access of data, controlled with fairness. Such an algorithm can be implemented on the hardware mechanism involved in the arbitration on the shared bus and the suggested solution can be applied both on the best effort and on the real time traffic, so as to allow fair accesses also under traffic-jam conditions.

Furthermore, the invention has been implemented to optimise and to make fair the use of shared buses for computers in telecommunication systems and the resources of systems using data coming from said buses and it is particularly interesting for multimedia systems. However, it provides very high performances for any kind of systems using shared transfer means and can be implemented both in hardware and in software.

BACKGROUND OF THE INVENTION

One of the objects sought for in systems for data communication is the ability of transferring information among different entities, reducing the problems due to resource share. Namely, each entity should transfer its own data without being affected by the presence of other entities. The systems of nowadays should have multimedia features; thus data flows with very different features and needs exist. Thus, it would be difficult to foresee the impact of certain flows on the latency time of others in a system with shared resources, especially as per data with real time characteristics.

The first way to solve the problem was to increase the transmission bandwidth of the means. Such a solution proved very useful in systems wherein very slow transfer means (e.g. an interconnection bus) embody the actual bottleneck of the system. Unfortunately, this is not the case for most of systems, since the bottleneck is hidden in the speed of the single entities, particularly in the speed of modules which receive data and then send them on other lines, that can be slow.

Imagine a situation wherein a lot of source entities are transferring data to the same destination entity; in this situation, it is apparent that the system can work fluently only when the absorption capabilities of the destination are larger than the sum of all production capabilities of each source entity. Again, it happens very hardly, since normally an entity has the same production and absorption capabilities, so that, even if two only entities insist on the same destination, a problem of traffic-jam is very likely to occur.

For instance, three source entities are shown in the following scheme, which, insisting on a single destination entity, provide the traffic-jam in the input buffer of the latter.

COMMUNICATON MEDIA

CONGESTED INPUT BUFFER

input buffer

SOURCE MODULE   SOURCE MODULE   SOURCE MODULE

TARGET MODULE

The problem may be solved by increasing the capability of the destination entity, by introducing registers or buffers only if the traffic-jam phenomena are limited within very short times, otherwise also the buffer can saturate. Furthermore, under real time traffic, such an increase must not be higher than a certain treshold, in order to avoid a too high delay.

Thus, the saturation of the destination causes traffic-jam and can put into a crisis general arbitration algorithms. An arbitration algorithm with fixed priorities is not fair and, thus, it is also not effective as for data flows with particular needs. Under traffic-jam conditions, only the source entity with the highest priority would have the opportunity to drive the destination entity without any intrusion. Mechanisms of balanced arbitration, such as the popular, common Round-Robin, limit the problem only partially. Indeed, if the following scheme is taken into account:

COMMUNICATON MEDIA

Round Robin arbitration algorithm

CONGESTED INPUT BUFFER

SOURCE MODULE   SOURCE MODULE   SOURCE MODULE

input buffer

TARGET MODULE

1G bit/sec      100M bit/sec      10M bit/sec

and reference is made to the saturation condition already set forth, wherein source entities with different production capabilities are provided, a balanced algorithm (Round-Robin) proves not fair in the case of source entities with very different capabilities. In particular, such an arbitration algorithm proves not fair for real time traffic, which is managed without particular attention, so causing serious latency matters.

One of the best solution presently applied can be a Round-Robin algorithm with double priority, wherein the real time traffic can be re-addressed to the chain with the highest priority, while the best effort traffic can be attributed to the chain with the lowest priority. Unfortunately, this implementation absolutely cannot solve the previously mentioned fairness problems for source entities with different capabilities.

Another way to solve the problem is to use TDM (Time Division Multiplexing) methods. In this case, a bandwidth is reserved to each data flow, so that different bandwidths are available for different needs. By using such a TDM method, the band not used by one of the entities is in fact not usable by the others, thus the method itself proves not effective.

Also other "weighed Round-Robin" algorithms have been developed, for instance based on "urgency counters" according to the proposals of the "Computer Architecture and VLSI Systems" division of the Institute of Computer Science of Crete (see: "Weighed Round Robin Schedular using Per-class Urgency Counters", shown on the web of the Institute), but they also show serious limits. The following Table, containing the results of simulations relating to such algorithms, shows in fact that a big number of arbitrations have been lost.

| | A | B | C | | | A | B | C | | | A | B | C | A/B | B/C | A/B | B/C |
| weights | 10 | 6 | 4 | 20 | | | | | | | | | | | | | |
| cycle number | urgency counter | urgency counter | urgency counter | decrement value | winner | won cycles | won cycles | won cycles | right cycles | lost cycles | won perc. | won perc. | won perc. | class weights ratio | class weights ratio | won cycles ratio | won cycles ratio |
|---|---|---|---|---|---|---|---|---|---|---|---|---|---|---|---|---|---|
| 1 | 10 | 6 | 4 | | A | 1 | 0 | 0 | 1 | 0 | 100.0 | 0.0 | 0.0 | 1.67 | 1.50 | | |
| 2 | -10 | 12 | 8 | | B | 1 | 1 | 0 | 2 | 0 | 50.0 | 50.0 | 0.0 | 1.67 | 1.50 | 1.00 | |
| 3 | 0 | -8 | 12 | | C | 1 | 1 | 1 | 3 | 0 | 33.3 | 33.3 | 33.3 | 1.67 | 1.50 | 1.00 | 1.00 |
| 4 | 10 | -2 | -8 | | A | 2 | 1 | 1 | 4 | 0 | 50.0 | 25.0 | 25.0 | 1.67 | 1.50 | 2.00 | 1.00 |
| 5 | -10 | 4 | -4 | | B | 2 | 2 | 1 | 5 | 0 | 40.0 | 40.0 | 20.0 | 1.67 | 1.50 | 1.00 | 2.00 |
| 6 | 0 | -16 | 0 | | A | 3 | 2 | 1 | 6 | 0 | 50.0 | 33.3 | 16.7 | 1.67 | 1.50 | 1.50 | 2.00 |
| 7 | -20 | -10 | 4 | | C | 3 | 2 | 2 | 7 | 0 | 42.9 | 28.6 | 28.6 | 1.67 | 1.50 | 1.50 | 1.00 |
| 8 | -10 | -4 | -16 | | lost cycle | 3 | 2 | 2 | 7 | 1 | 42.9 | 28.6 | 28.6 | 1.67 | 1.50 | 1.50 | 1.00 |
| 9 | 0 | 2 | -12 | | B | 3 | 3 | 2 | 8 | 1 | 37.5 | 37.5 | 25.0 | 1.67 | 1.50 | 1.00 | 1.50 |
| 10 | 10 | -18 | -8 | | A | 4 | 3 | 2 | 9 | 1 | 44.4 | 33.3 | 22.2 | 1.67 | 1.50 | 1.33 | 1.50 |
| 11 | -10 | -12 | -4 | | lost cycle | 4 | 3 | 2 | 9 | 2 | 44.4 | 33.3 | 22.2 | 1.67 | 1.50 | 1.33 | 1.50 |
| 12 | 0 | -6 | 0 | | A | 5 | 3 | 2 | 10 | 2 | 50.0 | 30.0 | 20.0 | 1.67 | 1.50 | 1.67 | 1.50 |
| 13 | -20 | 0 | 4 | | C | 5 | 3 | 3 | 11 | 2 | 45.5 | 27.3 | 27.3 | 1.67 | 1.50 | 1.67 | 1.00 |
| 14 | -10 | 6 | -16 | | B | 5 | 4 | 3 | 12 | 2 | 41.7 | 33.3 | 25.0 | 1.67 | 1.50 | 1.25 | 1.33 |
| 15 | 0 | -14 | -12 | | A | 6 | 4 | 3 | 13 | 2 | 46.2 | 30.8 | 23.1 | 1.67 | 1.50 | 1.50 | 1.33 |
| 16 | -20 | -8 | -8 | | lost cycle | 6 | 4 | 3 | 13 | 3 | 46.2 | 30.8 | 23.1 | 1.67 | 1.50 | 1.50 | 1.33 |
| 17 | -10 | -2 | -4 | | lost cycle | 6 | 4 | 3 | 13 | 4 | 46.2 | 30.8 | 23.1 | 1.67 | 1.50 | 1.50 | 1.33 |
| 18 | 0 | 4 | 0 | | B | 6 | 5 | 3 | 14 | 4 | 42.9 | 35.7 | 21.4 | 1.67 | 1.50 | 1.20 | 1.67 |
| 19 | 10 | -16 | 4 | | A | 7 | 5 | 3 | 15 | 4 | 46.7 | 33.3 | 20.0 | 1.67 | 1.50 | 1.40 | 1.67 |
| 20 | -10 | -10 | 8 | | C | 7 | 5 | 4 | 16 | 4 | 43.8 | 31.3 | 25.0 | 1.67 | 1.50 | 1.40 | 1.25 |
| 50 | -10 | -12 | 8 | | C | 17 | 12 | 9 | 38 | 12 | 44.7 | 31.6 | 23.7 | 1.67 | 1.50 | 1.42 | 1.33 |
| 100 | -20 | 2 | -8 | | B | 34 | 24 | 17 | 75 | 25 | 45.3 | 32.0 | 22.7 | 1.67 | 1.50 | 1.42 | 1.41 |
| 200 | -10 | 4 | -16 | | B | 67 | 47 | 34 | 148 | 52 | 45.3 | 31.8 | 23.0 | 1.67 | 1.50 | 1.43 | 1.38 |
| 500 | -10 | -16 | 8 | | C | 167 | 116 | 84 | 367 | 133 | 45.5 | 31.6 | 22.9 | 1.67 | 1.50 | 1.44 | 1.38 |
| 1000 | -20 | -6 | -8 | | lost cycle | 334 | 231 | 167 | 732 | 268 | 45.6 | 31.6 | 22.8 | 1.67 | 1.50 | 1.45 | 1.38 |

The example above shows three entities A, B and C with their relevant weights, 10, 6 and 4, respectively, acting on the same shared bus.

The simulation displays ("winner" coloumn) that many arbitrations do not elect any winner, since the winner entity should reach a positive value in its urgency counter. Furthermore, the following simulation shows that, when an entity dynamically reduces its own data transfer speed, the others do not take advantage of this availability of bandwidth.

In fact, a temporary deactivation has been simulated in the following example, simply by forcing to zero the urgency counter of the entity A. The table shows that the number of arbitrations won by the entities B and C is not increased, even when the entity absolutely does not partecipate to the arbitrations, if the field "decrement value" of all of entities is not immediately updated.

| | A | B | C | | | A | B | C | | | A | B | C | A/B | B/C | A/B | B/C |
|---|---|---|---|---|---|---|---|---|---|---|---|---|---|---|---|---|---|
| weights | 0 | 6 | 4 | 20 | | | | | | | | | | | | | |
| cycle number | urgency counter | urgency counter | urgency counter | decrement value | winner | won cycles | won cycles | won cycles | right cycles | lost cycles | won perc. | won perc. | won perc. | class weights ratio | class weights ratio | won cycles ratio | won cycles ratio |
| 1 | 0 | 6 | 4 | | B | 0 | 1 | 0 | 1 | 0 | 0.0 | 100.0 | 0.0 | 0.00 | 1.50 | | |
| 10 | 0 | -18 | -8 | | lost cycle | 0 | 3 | 2 | 5 | 5 | 0.0 | 60.0 | 40.0 | 0.00 | 1.50 | 0.00 | 1.50 |
| 100 | 0 | 2 | -8 | | B | 0 | 24 | 17 | 41 | 59 | 0.0 | 58.5 | 41.5 | 0.00 | 1.50 | 0.00 | 1.41 |
| 1000 | 0 | -6 | -8 | | lost cycle | 0 | 231 | 167 | 398 | 602 | 0.0 | 58.0 | 42.0 | 0.00 | 1.50 | 0.00 | 1.38 |

## SUMMARY OF THE INVENTION

The object of this invention is to provide a new method to transfer data among different modules of a system (especially of a telecommunication system) which are connected by a shared bus, particularly to obtain under traffic-jam conditions, continuously and with no dead time, a use of resources fairly distributed among the modules themselves, by employing mechanisms which allow to control the whole amount of used data assigned to each module.

The idea on which this invention is based is to develop a new algorithm for a fair arbitration, which can be used both by hardware and software, the concept of fairness being the one defined in S. Keshav: "Congestion Control in Computer Networks".

The inventive method is substantially characterised in that it employs a distributed arbitration algorithm, that can be implemented on both hardware and software of the different modules of the system, which ensures a fair and weighed access of the data to the shared bus interconnecting the modules, the weight relating to each module/flow being monitored through tags, and in that said tags are applied to the data flows entering each module, in order to monitor the access to the shared bus, so that, under traffic-jam conditions, a portion of the shared bus is always reserved to each module. Said tags are applied by an operator upon the system start-up and the tagging can be modified during the operation of the system.

In substance, according to the method of this invention, a data flow entering the system can be tagged with a new information relating to the priority weight which is attributed to that flow in the machine. This new priority field can be used by all activities - hardware and software - interested to such a flow.

The following scheme shows what has just been set forth.

COMMUNICATON MEDIA

CONGESTED INPUT BUFFER

Flow driven weighed arbitration algorithm

SOURCE MODULE | SOURCE MODULE | SOURCE MODULE

input buffer

TARGET MODULE

input TAG | input TAG | input TAG

1G bit/sec | 100M bit/sec | 10M bit/sec

The field "priority weight" can be used also by the arbitration algorithm of the bus system to solve the problems of access to the bus and to the resources of the system itself. This kind of algorithm proved really useful to solve the above reported conflicts.

BRIEF DESCRIPTION OF THE DRAWINGS

In the annexed drawings:

Fig. 1 is a block diagram of the hardware for fair arbitration according to the invention, used on each entity of a multimedia bus;
Fig. 2 shows the block diagram of the bus arbitrator, with particular reference to the transmission part;
Fig. 3 shows in graphic form the behaviour of the system while each module dynamically changes its own requests to the bus;
Fig. 4 shows how different entities share the bandwidth of a means, by using the algorithm according to the invention; and
Fig. 5 shows how to modify the conditions in Fig. 4 when utilising a CBQ algorithm.

DESCRIPTION OF EMBODIMENTS OF THE INVENTION

The first application of the present invention relates to the arbitration algorithm of a telecommunication system with shared bus. This bus originally was divided into two parts, a data part and an arbitration part, the latter transporting the information needed to arbitrate the bus for the subsequent cycle during the completion of the previous one.
The following representation illustrates the main timing of a generic arbitration, wherein the concept of traffic with different priorities had already been introduced. In this embodiment, each destination expresses its own "status of receiving queues", so that each requesting entity can send the relevant request only if the relative destination is apt to receive data. After this procedure, the arbitration logic, which is distributed on each module, univocally determines the winning module by using a Round Robin algorithm to solve the concurrent arbitration requests.

Distributed winner knowledge

| High priority target queues status | Low priority target queues status | High priority request flags | Low priority request flags | Target pointer |
|---|---|---|---|---|

| Previous data frame | Next data frame |
|---|---|

As above explained, this Round Robin method cannot solve the traffic-jam problems in case of source entities with different capabilities. Thus, the Round Robin algorithm is improved according to the invention, so as to obtain a fair arbitrationfor data flow possessing different features. The following representation shows that the above "priority weight", applied with tags to each data flow, is used as an arbitration weight.

Distributed winner knowledge

| High priority target queues status | Low priority target queues status | Arbitration weights | Target pointer |
|---|---|---|---|

| Previous data frame | Next data frame |
|---|---|

In this way, modules not winning the access to the bus can increase their weight for the subsequent arbitration, so that each module can become the one with the highest priority after a certain number of cycles, depending on its first "weight applied with tags".

Situations wherein more entities have the same highest weight can be solved with the Round Robin method or simply with a method with fixed priority. Behaviour simulations of the inventive method evidenced that the method with fixed priority, used just to solve the occasional identities in weight, do not affect priority linearity if the highest "weight applied with tags" is higher than the number of entities on the bus (inverted weights employed: 0 = the highest priority; 255 = the lowest priority).

The following representation - a detail of the previous one - shows how the field "arbitration weight" can be implemented to differentiate two main groups of priorities. For instance, real time flows should use tags with the field relative to the priority so that real time path always has priority with respect to best effort paths.

| *Arbitration weight field* | |
|---|---|
| High priority request flags | Incrementable tagged weight |

Simulations of this algorithm, where more entities drive flows towards the same destinations showed a direct linearity with respect to the "weight applied with tags" and to the number of won arbitrations. Furthermore, when one or more entities stop to transmit, the new available bandwidth is linearly shared among the other modules, depending on their relative weights.

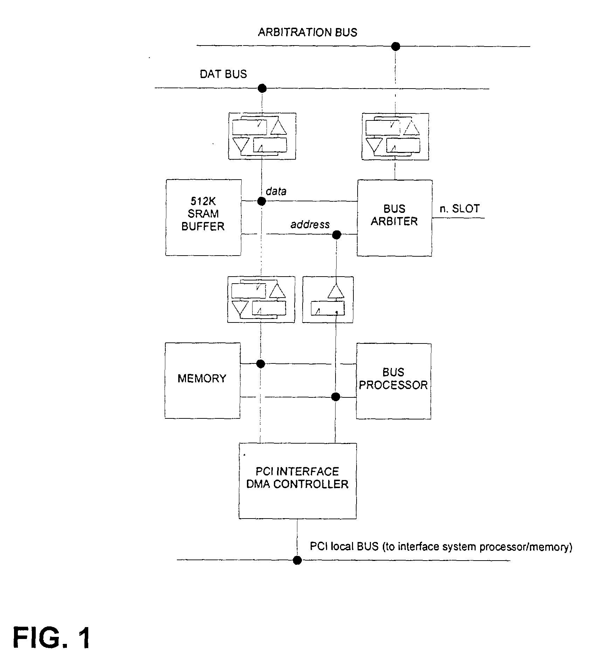

Consider, now, Fig. 1 of the annexed drawings, which is a block diagram of the hardware for fair arbitration used, according to the invention, on each entity of the multimedia bus.

The interface of the multimedia bus acts as an intelligent peripheral, mapped on PCI bus for the main processor; in this case, a dedicated processor is used to create and use input/output queues. This processor is able to move data from and to the memory of a processor system, by using a DMA controller, which is included in the PCI interface controller. A bus controller is used to control input/output queues and to arbitrate the bus, by using the mentioned algorithm.

The multimedia bus operates in the present implementation with signal levels GTL+, by using an owner protocol, so that special transceivers are used to interface the same.

All of the input/output buffers are organised on a dedicated, static RAM which can be accessed by the bus processor and by the bus arbitrator. More circular buffers are implemented in this memory, so as to create different queues for the traffic to be transmitted/received, the high/low priority, the accesses to multiple/single destination and to every possible destination. The following table scheme shows how to physically share the buffer memory.

| START BUFFER ADDRESS (hex) | | END BUFFER ADDRESS (hex) |
|---|---|---|
| 00000 | buffer TX High priority, destination device 0 | 01FFF |
| 02000 | buffer TX Low priority, destination device 0 | 03FFF |
| 04000 | buffer TX High priority, destination device 1 | 05FFF |
| 06000 | buffer TX Low priority, destination device 1 | 07FFF |
| 08000 | buffer TX High priority, destination device 2 | 09FFF |
| 0A000 | buffer TX Low priority, destination device 2 | 0BFFF |
| 0C000 | buffer TX High priority, destination device 3 | 0DFFF |
| 0E000 | buffer TX Low priority, destination device 3 | 0FFFF |
| 10000 | buffer TX High priority, destination device 4 | 11FFF |
| 12000 | buffer TX Low priority, destination device 4 | 13FFF |
| 14000 | buffer TX High priority, destination device 5 | 15FFF |
| 16000 | buffer TX Low priority, destination device 5 | 17FFF |
| 18000 | buffer TX High priority, destination device 6 | 19FFF |
| 1A000 | buffer TX Low priority, destination device 6 | 1BFFF |
| 1C000 | buffer TX High priority, destination device 7 | 1DFFF |
| 1E000 | buffer TX Low priority, destination device 7 | 1FFFF |
| 20000 | buffer TX High priority, destination device 8 | 21FFF |
| 22000 | buffer TX Low priority, destination device 8 | 23FFF |
| 24000 | buffer TX High priority, destination device 9 | 25FFF |
| 26000 | buffer TX Low priority, destination device 9 | 27FFF |
| 28000 | buffer TX High priority, destination device 10 | 29FFF |
| 2A000 | buffer TX Low priority, destination device 10 | 2BFFF |
| 2C000 | buffer TX High priority, destination device 11 | 2DFFF |
| 2E000 | buffer TX Low priority, destination device 11 | 2FFFF |
| 30000 | buffer TX High priority, multicast transaction | 31FFF |
| 32000 | buffer TX Low priority, multicast transaction | 33FFF |
| 34000 | buffers pointers | 3FFFF |
| 40000 | buffer RX High priority | 5FFFF |
| 60000 | buffer RX Low priority | 7FFFF |

This implementation refers to a twelve-modules system, which results in the memory divided into twelve different transmission buffers. In fact, this is important to solve the problem known as "head of line blocking"; in this way, when a destination to which it is addressed is under saturation conditions, the arbitration logic can operate with all other possible destinations. Moreover, the dedicated multicast buffer, which is implemented in RAM positions, replacing a traditional FIFO, allows to divide the multicast data transfer into more cycles when some of the destinations to which it is addressed are under engaged conditions.

To have differentiate buffers, for traffic with respectively high and low priority reduces of course the minimum latency for real time flows.

By way of example, each packet of data transfer could be classified as a simplified queueing algorithm CBQ (Class Based Queueing), based on managing a share of connections and resources with two classes only. The user's packet UDP (User Datagram Protocol) could be classified as having high priority, whilst the other data could be classified as having low priority.

This simplified CBQ algorithm should be implemented at a level of driving or controlling a hypothetical network, used to connect the system, in order to ensure a first level of "service quality". A better mechanism will be implemented as soon as sofisticated protocols, such as RSVP with integrated and differentiated services, are available.

On each transmission buffer data have the following format:

| 31          | 24 | 23            | 16 | 15 |  | 8 | 7 | 0 |
|-------------|----|---------------|----|----|--|---|---|---|
| ARBITRATION WEIGHT | | TRANSFER SIZE | | | | | DESTINATION ADDR | |

VARIABLE LENGHT
TRANSMISSION DATA

The first information of the packet is a control word, used just by the bus arbitrator and the information which brings is:

- destination address: each group of bits addresses to a specific destination, for instance 10001010001 will be used to a multicast data transfer towards destination entities occupying slots 0, 4, 6 2 11;
- transfer size: this field is used to provide information about the length of the subsequent data packet; in this case an eight-byte granularity has been used;
- arbitration weight: it is used to define the priority of the arbitration.

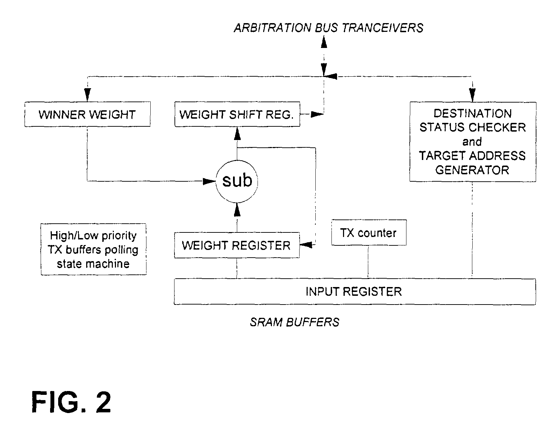

Fig. 2 shows the block diagram of the bus arbitrator; particular attention has been devoted to the transmission part therein.

A hardware finite state machine has been used to determine the status of the various buffers implemented in the dedicated SRAM; this hardware is able to realise the presence of transmitting and receiving packets by comparing the various queue pointers.

When a transmission packet has been found, its control word is read out. This information is used to verify the status of destinations to which it is addressed and to prepare the transmission counter and the weight register.

Each entity simultaneously updates the bit with high/low priority and the information relating to the weight on a dedicated arbitration signal. Thus, each entity, since it knows how to give an interpretation about the information coming from all of the other entities, identifies the request having the highest priority, then the winner of the arbitration.

Each entity loosing the arbitration decreases its own weight register (denied logic) with the weight of the winner; that is basic to ensure system linearity, since otherwise entities using weight with high priority would be too advantaged.

Many software algorithms may be used to calculate the weight of a specific flow: the most simple way to dynamically define it has been used herein by way of example only, by taking into account the number of users connected to each module.

With such a criterion, if Umx is the number of users connected to a specific module and Us of users connected to a system,

$$Umx = U1 + U2 + Un \text{ etc.}$$

$$Us = Um1 + Um2 + Umn \text{ etc.}$$

The complementary value of the weight for each module is given by:

$$Wm = (1-(Um/Us)) * max\_weight$$

For instance, if ten users are connected to module 1 and twenty users are connected to module 2:

U1 = 10
U2 = 20
Us = 30
Max_weight = 255 (8 bits register)
Wm1 = (1-(10/30)) * 255 = 170
Wm2 = (1-(20/30)) *255 = 85

Thus, module 2 has the highest weight.

The following tables summarise the simulation of a twelve slot system, using different weights for the arbitration, the indicated weight value being the complementary one, so that the weight 16 is used as the highest one, whilst the weight 192 is used as the lowest one. The simulation has been carried out without any information about real time and best effort kinds, just to show the inventive fairness behaviour.

The calculation of the latency in this example has been based on 64 byte packets, moved at a speed of 2.1 Gbit/sec. The table shows the linear ratio between weight and bus utilisation.

| Slot | | 0 | 1 | 2 | 3 | 4 | 5 | 6 | 7 | 8 | 9 | 10 | 11 | 0 | 1 | 2 | 3 | 4 | 5 | 6 | 7 | 8 | 9 | 10 | 11 |
|---|---|---|---|---|---|---|---|---|---|---|---|---|---|---|---|---|---|---|---|---|---|---|---|---|---|
| | weight | 16 | 32 | 48 | 64 | 80 | 96 | 112 | 128 | 144 | 160 | 176 | 192 | | | | | | | | | | | | |
| cycle number | winner slot | ARBITRATION COUNTER | | | | | | | | | | | | WON CYCLES | | | | | | | | | | | |
| 1 | 0 | 16 | 32 | 48 | 64 | 80 | 96 | 112 | 128 | 144 | 160 | 176 | 192 | 1 | 0 | 0 | 0 | 0 | 0 | 0 | 0 | 0 | 0 | 0 | 0 |
| 10 | 4 | 16 | 18 | 17 | 49 | 0 | 16 | 32 | 48 | 64 | 80 | 96 | 112 | 5 | 2 | 1 | 1 | 1 | 0 | 0 | 0 | 0 | 0 | 0 | 0 |
| 100 | 1 | 16 | 5 | 36 | 38 | 18 | 35 | 17 | 97 | 33 | 97 | 161 | 34 | 34 | 17 | 11 | 8 | 6 | 5 | 4 | 4 | 3 | 3 | 3 | 2 |
| 1000 | 2 | 10 | 2 | 1 | 4 | 19 | 5 | 75 | 60 | 141 | 94 | 95 | 192 | 324 | 161 | 108 | 80 | 64 | 53 | 46 | 40 | 36 | 32 | 29 | 27 |
| | | | | | | | | | | | | | bus utilization percentage | 32.4 | 16.1 | 10.8 | 8.0 | 6.4 | 5.3 | 4.6 | 4.0 | 3.6 | 3.2 | 2.9 | 2.7 |
| | | | | | | | | | | | | | latency (nsec.) | 741 | 1491 | 2222 | 3000 | 3750 | 4528 | 5217 | 6000 | 6667 | 7500 | 8276 | 8889 |

Packets size    64 byte
Packets transfer time 240 nsec

The deactivation of the slot 1 has been simulated in the following table. The table shows that the accesses not used by slot 1 are redistributed to the other entities, while keeping the fairness of the remainder entities.

| Slot | | 0 | 1 | 2 | 3 | 4 | 5 | 6 | 7 | 8 | 9 | 10 | 11 | 0 | 1 | 2 | 3 | 4 | 5 | 6 | 7 | 8 | 9 | 10 | 11 |
|---|---|---|---|---|---|---|---|---|---|---|---|---|---|---|---|---|---|---|---|---|---|---|---|---|---|
| | weight | 16 | ### | 48 | 64 | 80 | 96 | 112 | 128 | 144 | 160 | 176 | 192 | | | | | | | | | | | | |
| cycle number | winner slot | ARBITRATION COUNTER | | | | | | | | | | | | WON CYCLES | | | | | | | | | | | |
| 1 | 0 | 16 | ### | 48 | 64 | 80 | 96 | 112 | 128 | 144 | 160 | 176 | 192 | 1 | 0 | 0 | 0 | 0 | 0 | 0 | 0 | 0 | 0 | 0 | 0 |
| 10 | 5 | 16 | ### | 1 | 33 | 65 | 0 | 16 | 32 | 48 | 64 | 80 | 96 | 6 | 0 | 1 | 1 | 1 | 1 | 0 | 0 | 0 | 0 | 0 | 0 |
| 100 | 4 | 14 | ### | 34 | 3 | 0 | 33 | 31 | 127 | 79 | 160 | 63 | 128 | 40 | 0 | 13 | 9 | 8 | 6 | 5 | 5 | 4 | 4 | 3 | 3 |
| 1000 | 4 | 11 | ### | 34 | 51 | 4 | 85 | 108 | 109 | 30 | 79 | 176 | 177 | 385 | 0 | 128 | 96 | 77 | 64 | 55 | 48 | 42 | 38 | 35 | 32 |
| | | | | | | | | | bus utilization percentage | | | | 38.5 | 0.0 | 12.8 | 9.6 | 7.7 | 6.4 | 5.5 | 4.8 | 4.2 | 3.8 | 3.5 | 3.2 |
| Packets size | 64 byte | | | | | | | | | | | | | | | | | | | | | | | | |
| Packets transfer time | 240 nsec | | | | | | | | latency (nsec.) | | | | 623 | #### | 1875 | 2500 | 3117 | 3750 | 4364 | 5000 | 5714 | 6316 | 6857 | 7500 |

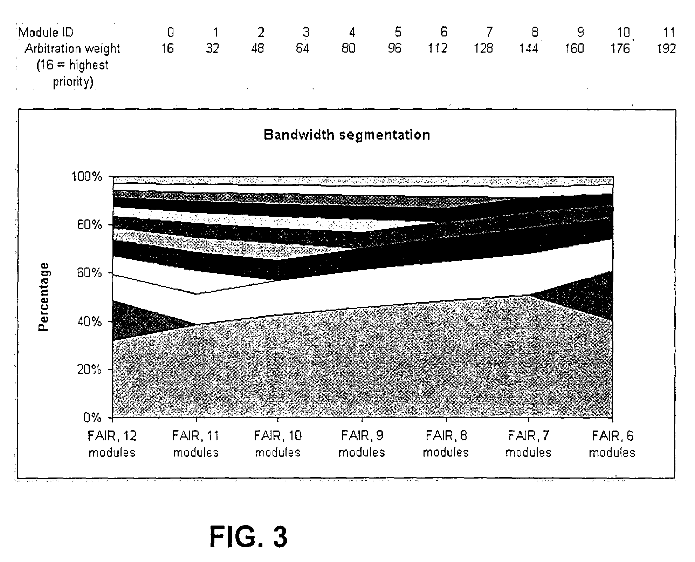

The depiction provided by Fig. 3 graphically shows the system behaviour while each module dynamically changes its own requests to the bus. In this example:

1. All of the twelve active modules.
2. Deactivation of slot 1.
3. Deactivation of slot 3.
4. Deactivation of slot 5.
5. Deactivation of slot 7.
6. Deactivation of slot 9.
7. Re-activation of slot 1.

The dynamic sharing of the bandwidth, introduced by this algorithm, has a direct impact on the latency values of the bus. Of course, higher weights give raise to lower latency times, and so on.
For instance, it can be based on 64 bytes packets, moved at a speed of 2,1 Gbit/sec to calculate latency. This has been done in the following diagram.

| Module ID | 0 | 1 | 2 | 3 | 4 | 5 | 6 | 7 | 8 | 9 | 10 | 11 |
|---|---|---|---|---|---|---|---|---|---|---|---|---|
| Arbitration weight (16 = highest priority) | 16 | 32 | 48 | 64 | 80 | 96 | 112 | 128 | 144 | 160 | 176 | 192 |

**Bus latency (64 bytes packets)**

The use of the distributed arbitration algorithm according to the invention, implemented on both hardware and software of the different modules of the system, allows many advantages.

First of all, it allows the largest use of the capabilities of the available means and, by ensuring fair flow priorities, it allows a fair share of resources, especially under traffic-jam conditions.

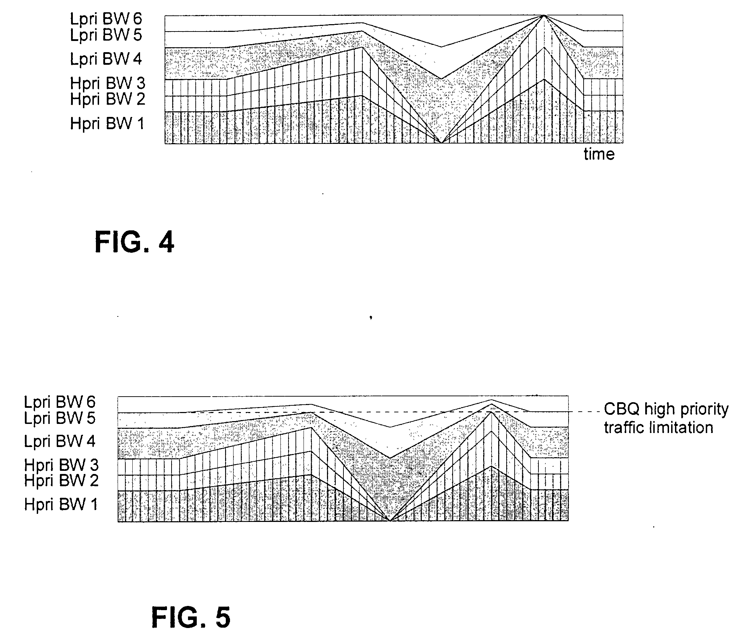

Fig. 4 in the annexed drawings shows six entities sharing the bandwidth of a means, by using the algorithm above defined, in this example the weight of BW1 being double than the ones of BW2 and BW3, whilst the one of BW4 is double than the ones of BW5 and BW6. The hatched bandwidths represent the traffic having higher priority (1, 2 and 3), while the others (4, 5 and 6) represent the traffic having lower priority.

The same Fig. 4 shows that, when the traffic having high priority uses all the available bandwidth, the other flows (4, 5 and 6) are reduced to zero, whilst, when there is a limited traffic having high priority, a redistribution among the means takes place also for flows having low priority. Furthermore, it is apparent that the relationship between BW1 and BW2/3 is always constant, like the relationship between BW3 and BW4/5.

Conversely, Fig. 5 shows the same circuit when the previously defined CBQ algorithm is applied thereto: in such a case, the traffic having high priority cannot saturate the bus and a minimum bandwidth, which can be programmed, is reserved to flows having low priority.

It is understood that other applications of the invention are conceivable, which can indirectly utilise the described mechanisms. As already mentioned, the arbitration behaviour can be controlled by the method of input tagging, so that the load of each module can be dynamically balanced simply by applying intelligent algorithms in this input step. That is to say, by changing the input data flow for each module, a SW algorithm is able to change the work load in each computing entity.

**Claims**

1. Method to transfer data among different modules of a system connected by a shared bus, particularly to obtain a continuous and without inactive period fairly shared use of resources among the modules themselves under traffic-jam conditions, **characterised in that** it employs a distributed arbitration algorithm, that can be implemented on both hardware and software of the different modules of the system, which ensures a fair and weighed access of the data to the shared bus interconnecting the modules, the weight relating to each module/flow being monitored through tags, and **in that** said tags are applied to the data flows entering each module, in order to monitor the access to the shared bus.

2. Method as claimed in claim 1., wherein a part of the shared bus is always reserved to each module under traffic-jam conditions.

3. Method as claimed in claims 1. and 2., wherein the tags are applied by an operator upon the start-up of the system.

4. Method as claimed in any claim 1. to 3., wherein the tagging can be changed during the operation of the system.

5. Method as claimed in any claim 1. to 4., wherein the weights relating to each flow can be dynamically changed.

**FIG. 1**

*ARBITRATION BUS TRANCEIVERS*

FIG. 2

| Module ID | 0 | 1 | 2 | 3 | 4 | 5 | 6 | 7 | 8 | 9 | 10 | 11 |
|-----------|----|----|----|----|----|----|-----|-----|-----|-----|-----|-----|
| Arbitration weight (16 = highest priority) | 16 | 32 | 48 | 64 | 80 | 96 | 112 | 128 | 144 | 160 | 176 | 192 |

Bandwidth segmentation

## FIG. 3

Lpri BW 6
Lpri BW 5
Lpri BW 4
Hpri BW 3
Hpri BW 2
Hpri BW 1

time

# FIG. 4

Lpri BW 6
Lpri BW 5
Lpri BW 4
Hpri BW 3
Hpri BW 2
Hpri BW 1

CBQ high priority
traffic limitation

# FIG. 5

**European Patent Office**

**EUROPEAN SEARCH REPORT**

Application Number

EP 00 83 0638

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | KABATEPE M ET AL: "TWO PRIORITY SCHEMES FOR FAIR DISTRIBUTED QUEUE (FDQ) NETWORKS" PROCEEDINGS OF THE INTERNATIONAL CONFERENCE ON COMMUNICATIONS (ICC),US,NEW YORK, IEEE, vol. -, 23 May 1993 (1993-05-23), pages 376-380, XP000371118 ISBN: 0-7803-0950-2 * abstract * * page 376, right-hand column, paragraph 2 - page 377, left-hand column, paragraph 1 * * page 377, left-hand column, paragraph 6 - right-hand column, paragraph 3 * * page 380, left-hand column, paragraph 1 * | 1-5 | H04L12/40 H04L12/56 |
| X | KAUTZ R ET AL: "A distributed self-clocked fair queueing architecture for wireless ATM networks" WAVES OF THE YEAR 2000+ PIMRC '97. THE 8TH IEEE INTERNATIONAL SYMPOSIUM ON PERSONAL, INDOOR AND MOBILE RADIO COMMUNICATIONS. TECHNICAL PROGRAM, PROCEEDINGS (CAT. NO.97TH8271), PROCEEDINGS OF 8TH INTERNATIONAL SYMPOSIUM ON PERSONAL, INDOOR AND MOBILE , pages 189-193 vol.1, XP002169881 1997, New York, NY, USA, IEEE, USA ISBN: 0-7803-3871-5 * page 190, left-hand column, paragraph 4 - page 191, left-hand column, paragraph 1 * * page 191, right-hand column, paragraph 2 * | 1-5 | |

TECHNICAL FIELDS SEARCHED (Int.Cl.7)

H04L

-/--

The present search report has been drawn up for all claims

| Place of search | Date of completion of the search | Examiner |
|---|---|---|
| BERLIN | 18 June 2001 | Eraso Helguera, J |

**European Patent Office**

## EUROPEAN SEARCH REPORT

Application Number

EP 00 83 0638

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KABATEPE M ET AL: "BANDWIDTH ALLOCATION IN FAIR DISTRIBUTED QUEUE (FDQ) NETWORKS" PROCEEDINGS OF THE CONFERENCE ON COMPUTER COMMUNICATIONS (INFOCOM),US,LOS ALAMITOS, IEEE COMP. SOC. PRESS, 12 June 1994 (1994-06-12), pages 280-287, XP000496478 ISBN: 0-8186-5572-0 * page 287, left-hand column, paragraph 3 - right-hand column, paragraph 1 * ----- | 5 | |
| | | | TECHNICAL FIELDS SEARCHED (Int.Cl.7) |

The present search report has been drawn up for all claims

| Place of search | Date of completion of the search | Examiner |
|---|---|---|
| BERLIN | 18 June 2001 | Eraso Helguera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)